# EUROPÄISCHE PATENTSCHRIFT

(11) **EP 0 499 872 B1**
(45) Veröffentlichungstag und Bekanntmachung des Hinweises auf die Patenterteilung: **31.08.1994**
(21) Anmeldenummer: 92101808.1
(22) Anmeldetag: 04.02.1992
(51) Int. Cl.: G03B 42/04

(54) **Röntgenblattfilmkassette**
X-Ray leaf film cassette
Cassette de film pour feuille radiographique

(30) Priorität: 16.02.1991 DE 9101821 U
(43) Veröffentlichungstag der Anmeldung: 26.08.1992
(73) Patentinhaber: Agfa-Gevaert AG, 51373 Leverkusen (DE)
(72) Erfinder: Bauer, Walter, W-8000 München 83 (DE); Schmidt, Manfred, Dipl.-Ing., W-8011 Kirchheim (DE); Widemann, Ernst, Dipl.-Ing., W-8061 Hebertshausen (DE)

(56) Entgegenhaltungen:
- EP-A- 0 280 177
- DE-A- 3 535 981
- DE-C- 3 527 549
- DE-C- 3 535 978
- DE-U- 8 910 348

## Beschreibung

Die Erfindung betrifft eine Röntgenblattfilmkassette gemäß dem Oberbegriff des Anspruchs 1.

Eine Kassette dieser Art ist beispielsweise durch die DE-U-89 10 348 bekannt. Bei Kassetten gemäß der DE-U-89 10 348 wird eine Sandwichplatte, die aus zwei dünnen, thermoplastisch gebundenen Kohlefaserplatten besteht, zwischen denen eine dickere Hartschaumplatte verklebt ist, mit einem Rahmen verschweißt, verklebt oder umspritzt.

Die Kontakt- bzw. Klebefläche zwischen der Sandwichplatte und dem sie umgebenden Rahmen ist hierbei sehr gering. Hierdurch ist die Gefahr gegeben, daß sich bei längerem Gebrauch der Röntgenblattfilmkassette der verklebte, verschweißte oder umspritzte Rahmen von der Sandwichplatte löst.

Der Erfindung liegt daher die Aufgabe zugrunde, eine Röntgenblattfilmkassette der eingangs genannten Art zu schaffen, deren im Unterteil enthaltene Platte stabil und dauerhaft mit dem sie umgebenden Rahmen verbunden ist.

Diese Aufgabe wird nach der Erfindung gelöst durch die Merkmale des Hauptanspruchs. Weitere vorteilhafte Merkmale der Erfindung sind den Unteransprüchen entnehmbar.

Zu den bekannten Vorteilen der Sandwichbauweise kommt hinzu, daß die Platte, die einen oder mehrere erfindungsgemäße Stege aufweist, eine erhöhte Verwindungssteifigkeit hat.

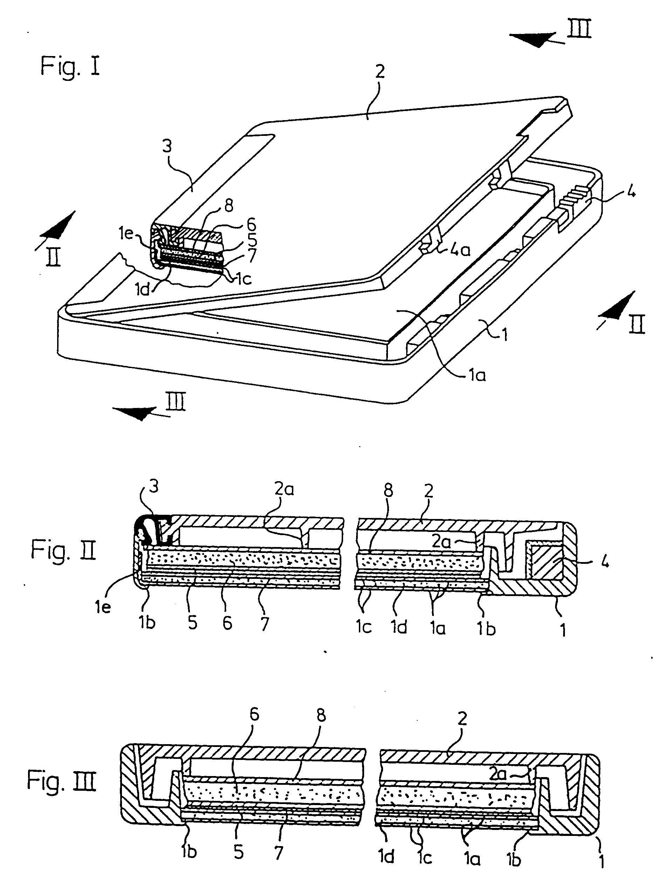

Die Erfindung wird anhand von Zeichnungen näher erläutert. Es zeigen
- Fig. 1: eine perspektivische, z.T. aufgebrochene Darstellung einer erfindungsgemäßen Kassette,
- Fig. 2: einen Schnitt durch die Kassette nach Figur 1 gemäß der Schnittlinie II-II,
- Fig. 3: einen Schnitt durch die Kassette nach Figur 1 gemäß der Schnittlinie III-III,
- Fig. 4: einen vergrößerten Ausschnitt aus Figur 1, wobei die äußere thermoplastisch gebundene Kohlefaserplatte 1c einen Steg 1e bildet,
- Fig. 5: einen vergrößerten Ausschnitt des Ausbruchs aus Figur 1, wobei die innere thermoplastisch gebundene Kohlefaserplatte 1c einen Steg 1e bildet,
- Fig. 6: einen vergrößerten Ausschnitt des Ausbruchs aus Figur 1, wobei die innere und die äußere thermoplastisch gebundene Kohlefaserplatte den Steg 1e gemeinsam bilden.

In den Figuren sind das Unterteil einer Röntgenfilmkassette mit 1, das über ein Scharnier 3 daran angelenkte Oberteil mit 2, die Verriegelungselemente für Ober- und Unterteil mit 4 und 4a, Verstärkungsstege am Oberteil mit 2a, eine mit den Verstärkungsstegen 2a verschweißte thermoplastische Platte mit 8, ein an der thermoplastischen Platte 8 befestigtes Andruckkissen mit 6, eine darauf aufgebrachte Verstärkerfolie mit 5 und der zwischen der Verstärkerfolie 5 und dem Unterteil 1 liegende Röntgenfilm mit 7 bezeichnet.

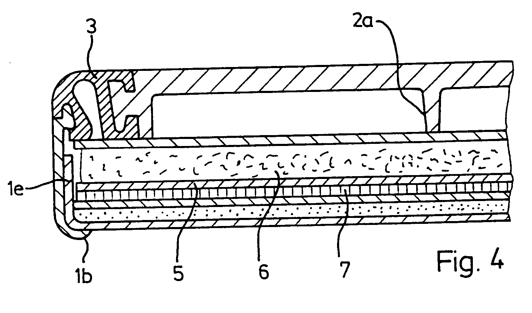

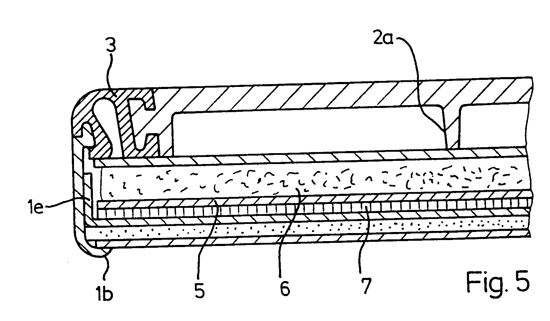

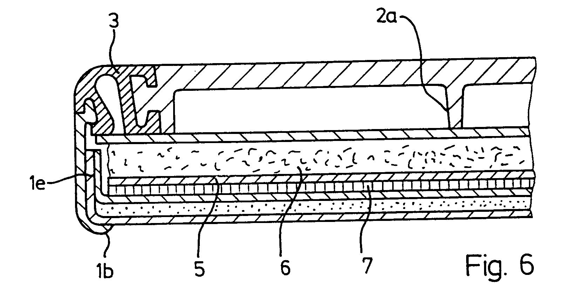

Das Besondere an der erfindungsgemäßen Kassette ist darin zu sehen, daß die im Unterteil 1 enthaltene Platte 1a an mindestens einem ihrer Ränder einen Steg 1e aufweist, der von einer der beiden thermoplastisch gebundenen Kohlefaserplatten 1c gebildet ist oder von beiden (siehe hierzu Figuren 4 bis 6). Die Platte 1a kann mit dem Rahmen 1 verschweißt oder verklebt sein. Die Schweißnähte zwischen Rahmen 1 und Platte 1a bzw. dem Steg 1e sind mit 1b bezeichnet.

Es ist aber auch möglich, die Platte 1a in eine Spritzform für das Unterteil einzulegen und mit einem Rahmen 1 zu umspritzen.

Das Besondere an der Platte 1a besteht nun darin, daß an mindestens einem ihrer Ränder eine der beiden oder beide thermoplastisch gebundene Kohlefaserplatten 1c über die Hartschaumplatte 1d hinausragen und daß das über die Hartschaumplatte 1d hinausragende Stück nach oben bzw. zum Röntgenblattfilmkassetten-Innern hin gebogen wird. Ein dadurch entstehender Steg 1e vergrößert die Klebe- bzw. Schweißfläche, so daß die zwischen Rahmen 1 und Steg 1e bzw. Platte 1a entstehende Verbindung den beim Kassettenhandling auftretenden Kräften standhalten kann. Zudem erhöht der Steg 1e die Verwindungssteifigkeit der Röntgenblattfilmkassette, ohne daß die Vorteile der Sandwichbauweise, wie kostengünstige Fertigung, einfaches Erzeugen einer Bombierung und hohe Transparenz für Röntgenstrahlen dabei verlorengingen. Da die thermoplastisch gebundenen Kohlefaserplatten 1c nur eine Dicke von ca. 0,3 mm aufweisen, wird die Wandstärke des Rahmens 1 nur auf maximal zweimal die Dicke der Kohlefaserplatten erhöht, also um ca. 0,6 mm. Somit ist auch die Bedingung erfüllt, daß die dem Scharnier 3 zugewandte Röntgenblattfilmkante möglichst nah an den Körper des Patienten zu liegen kommt.

## Patentansprüche

1. Röntgenblattfilmkassette mit einem der Strahlenquelle zuzuwendenden Kassettenunterteil (1) und einem daran angelenkten, mit dem Unterteil verriegelbaren Oberteil (2), wobei das Unterteil einen Rahmen und eine damit verbundene Platte (1a) enthält, die aus zwei dünnen, thermoplastisch gebundenen Kohlefaserplatten (1c) besteht, zwischen denen eine dickere Hartschaumplatte (1d) verklebt ist, dadurch gekennzeichnet, daß mindestens eine der gebundenen Kohlefaserplatten (1c) an mindestens einem Rand der Platte (1a) über die Hartschaumplatte (1d) hinausragt und nach oben zum Innern der Röntgenblattfilmkassette hin gebogen ist und einen Steg (1e) bildet.

2. Röntgenblattfilmkassette nach Anspruch 1, dadurch gekennzeichnet, daß die zur Röntgenblattfilmkassetten-Außenseite gewandte, thermoplastisch gebundene Kohlefaserplatte (1c) an dem parallel zu einem Scharnier (3) verlaufenden Rand über die Hartschaumplatte (1d) hinausragt und zum Kassetteninnern gebogen den Steg (1e) bildet.

3. Röntgenblattfilmkassette nach Anspruch 1, dadurch gekennzeichnet, daß die zur Röntgenblattfilmkassetten-Innenseite gewandte, thermoplastisch gebundene Kohlefaserplatte (1c) an dem parallel zu einem Scharnier (3) verlaufenden Rand über die Hartschaumplatte (1d) hinausragt und zum Kassetteninnern gebogen den Steg (1e) bildet.

4. Röntgenblattfilmkassette nach Anspruch 1, dadurch gekennzeichnet, daß die innere und äußere thermoplastisch gebundene Kohlefaserplatte (1c) an dem parallel zu einem Scharnier (3) verlaufenden Rand über die Hartschaumplatte (1d) hinausragen und zum Kassetteninnern gebogen den Steg (1e) bilden.

5. Röntgenblattfilmkassette nach einem der Ansprüche 2 bis 4, dadurch gekennzeichnet, daß die Platte (1a) einen zweiten Steg (1e) aufweist, der parallel zum ersten an dem dem ersten Steg (1e) gegenüberliegeden Plattenrand verläuft.

6. Röntgenblattfilmkassette nach einem der vorhergehenden Ansprüche, dadurch gekennzeichnet, daß die Platte (1a) mit dem Rahmen (1) verschweißt oder verklebt ist.

7. Röntgenblattfilmkassette nach einem der Ansprüche 1 bis 5, dadurch gekennzeichnet, daß die Platte (1a) in einer Spritzform für das Unterteil mit einem durch Spritzen herzustellenden Rahmen umspritzbar ist.

8. Röntgenblattfilmkassette nach einem der vorhergehenden Ansprüche, dadurch gekennzeichnet, daß die Platte (1a) eine in das Kassetteninnere gerichtete Bombierung aufweist.

## Claims

1. X-ray sheet film cassette, having a cassette bottom part (1) which is to face towards the radiation source and a top part (2) which is hinged on and interlockable with the bottom part, the bottom part comprising a frame and, connected thereto, a panel (1a) comprising two thin, thermoplastically bonded, carbon-fibre panels (1c), between which a thicker, rigid foam panel (1d) is glued, characterized in that at least one of the bonded carbon-fibre panels (1c), at at least one edge of the panel (1a), projects beyond the rigid foam panel (1d) and is bent up towards the interior of the X-ray sheet film cassette and forms a web (1e).

2. X-ray sheet film cassette according to claim 1, characterized in that the thermoplastically bonded carbon-fibre panel (1c) facing the outside of the X-ray sheet film cassette, at the edge extending parallel to a hinge (3), projects beyond the rigid foam panel (1d) and is bent towards the cassette interior to form the web (1e).

3. X-ray sheet film cassette according to claim 1, characterized in that the thermoplastically bonded carbon-fibre panel (1c) facing the inside of the X-ray sheet film cassette, at the edge extending parallel to a hinge (3), projects beyond the rigid foam panel (1d) and is bent towards the cassette interior to form the web (1e).

4. X-ray sheet film cassette according to claim 1, characterized in that the inner and outer thermoplastically bonded carbon-fibre panels (1c), at the edge extending parallel to a hinge (3), project beyond the rigid foam panel (1d) and are bent towards the cassette interior to form the web (1e).

5. X-ray sheet film cassette according to one of claims 2 to 4, characterized in that the panel (1a) has a second web (1e) which extends parallel to the first at the panel edge lying opposite the first web (1e).

6. X-ray sheet film cassette according to one of the preceding claims, characterized in that the panel (1a) is welded or glued to the frame (1).

7. X-ray sheet film cassette according to one of claims 1 to 5, characterized in that a frame to be manufactured by injection may be injection-moulded around the panel (1a) in an injection mould for the bottom part.

8. X-ray sheet film cassette according to one of the preceding claims, characterized in that the panel (1a) has a cambering directed into the cassette interior.

## Revendications

1. Cassette de film radiographique en feuille, comportant une partie inférieure de cassette (1) à orienter vers la source de rayons et une partie supérieure (2) verrouillable avec la partie inférieure et articulée à celle-ci, la partie inférieure contenant un cadre et une plaque (1a) qui lui est raccordée et est composée de deux plaques de fibres de carbone (1c) minces, liées thermoplastiquement et entre lesquelles est collée une plaque de mousse dure (1d) plus épaisse, caractérisée en ce qu'au moins une des plaques de fibres de carbone (1c) liées dépasse de la plaque de mousse dure (1d) sur au moins un bord de la plaque (1a) et est repliée vers le haut en direction de l'intérieur de la cassette de film radiographique en feuille et forme une aile (1e).

2. Cassette de film radiographique en feuille selon la revendication 1, caractérisée en ce que la plaque de fibres de carbone (1c) orientée vers l'extérieur de la cassette de film radiographique en feuille, et liée thermoplastiquement, dépasse de la plaque de mousse dure (1d) sur le bord parallèle à une charnière (3) et, repliée vers l'intérieur de la cassette, forme l'aile (1e).

3. Cassette de film radiographique en feuille selon la revendication 1, caractérisée en ce que la plaque de fibres de carbone (1c) orientée vers l'intérieur de la cassette de film radiographique en feuille, et liée thermoplastiquement, dépasse de la plaque de mousse dure (1d) sur le bord parallèle à une charnière (3) et, repliée vers l'intérieur de la cassette, forme l'aile (1e).

4. Cassette de film radiographique en feuille selon la revendication 1, caractérisée en ce que les plaques de fibres de carbone (1c) interne et externe, liées thermoplastiquement, dépassent de la plaque de mousse dure (1d) sur le bord parallèle à une charnière (3) et, repliées vers l'intérieur de la cassette, forment l'aile (1e).

5. Cassette de film radiographique en feuille selon une des revendications 2 à 4, caractérisée en ce que la plaque (1a) présente une deuxième aile (1e) parallèle à la première sur le bord de la plaque opposé à la première aile (1e).

6. Cassette de film radiographique en feuille selon une des revendications précédentes, caractérisée en ce que la plaque (1a) est soudée ou collée au cadre (1).

7. Cassette de film radiographique en feuille selon une des revendications 1 à 5, caractérisée en ce que la plaque (1a) est réalisable par injection dans un moule à injection destiné à la partie inférieure, avec un cadre à fabriquer par injection.

8. Cassette de film radiographique en feuille selon une des revendications précédentes, caractérisée en ce que la plaque (1a) présente un bombement dirigé vers l'intérieur de la cassette.
